# EUROPÄISCHE PATENTANMELDUNG

(11) **EP 1 103 498 A1**
(43) Veröffentlichungstag der Anmeldung: **30.05.2001**
(21) Anmeldenummer: 00250380.3
(22) Anmeldetag: 15.11.2000
(51) Int. Cl.: B65G 47/90, B25J 15/02, B25J 19/06

(54) **Vorrichtung zum Greifen von Lasten, die insbesondere mittels eines Manipulators von oben oder seitlich zu greifen sind**

(30) Priorität: 29.11.1999 DE 19958834
(71) Anmelder: Atecs Mannesmann AG, 40213 Düsseldorf (DE)
(72) Erfinder: Ostholt, Rüdiger, 58300 Wetter (DE)
(74) Vertreter: Meissner, Peter E., Dipl.-Ing.

(57) **Zusammenfassung**

Die Erfindung betrifft eine Vorrichtung zum Greifen von Lasten, mit zwei einander zugewandten Greifelementen, die an mindestens einem Längsträger angeordnet sind. Um eine kurzbauende Vorrichtung zu schaffen, die bei möglichst großem Greifhub auch in enge und schmale Öffnungen einführbar ist, wird vorgeschlagen, zwei parallele Längsträger (3) vorzusehen, an denen jeweils ein sich in Längsträgerrichtung erstreckendes Trägerelement (5) längsverschieblich geführt und abgestützt ist, wobei die beiden Trägerelemente (5) in Längsträgerrichtung gesehen seitlich voneinander beabstandet und zumindest über eine Teillänge der Trägerelementlänge aneinander vorbeibewegbar sind. Zwei Greifelemente (1) sind an den Enden beider Trägerelemente (5) abgestützt und oberhalb oder unterhalb von den Längsträgern (3) angeordnet, und zwar an den beiden Enden, die bei vollständig auseinandergeschobenen Trägerelementen (5) quer zu diesen gesehen außen liegen. Weiter gehören zur Vorrichtung zwei sich am Rahmen oder am Gehäuse (2) auf einander gegenüberliegenden Seiten abstützende, die beiden Trägerelemente (5) gegenläufig verschiebende Einrichtungen (8).

## Beschreibung

Die Erfindung betrifft eine Vorrichtung zum Greifen von Lasten, die insbesondere mittels eines Manipulators von oben oder seitlich zu greifen sind, gemäß dem Oberbegriff des Anspruchs 1.

Es ist allgemein bekannt, Greifvorrichtungen für das Greifen von Lasten mit zwei einander zugewandten Greifbacken zu versehen, die meist unterhalb eines Längsträgers angeordnet und quer zu diesem ausgerichtet sind. Die Greifelemente sind dabei an dem Längsträger gegenläufig zueinander verschiebbar abgestützt, wobei auch eines der beiden Greifelemente feststehend am Längsträger angeordnet sein kann. Zur besseren Aufnahme von Seitenkräften können die Greifelemente auch an zwei parallelen Längsträgern geführt sein.

Den bekannten Greifvorrichtungen mangelt es an einer kompakten Bauweise, die es insbesondere einem Manipulator ermöglicht, die Greifvorrichtung auch in engen Behältern zur Aufnahme von Werkstücken u. dgl. bei möglichst großem Greifhub zu verwenden.

Die Aufgabe der Erfindung ist es, eine Vorrichtung zum Greifen von Lasten, die insbesondere mittels eines Manipulators von oben oder seitlich gegriffen werden sollen, bei möglichst großem Greifhub zu schaffen, der auch in enge und schmale Öffnungen einführbar ist.

Die Lösung dieser Aufgabe ist durch die im Anspruch 1 angegebenen Merkmale gegeben. Die Merkmale der Unteransprüche beschreiben vorteilhafte Ausgestaltungen der Vorrichtung.

Die Lösung sieht vor:
- zwei parallele Längsträger, an denen jeweils ein sich in Längsträgerrichtung erstreckendes Trägerelement längsverschieblich geführt und abgestützt ist, wobei die beiden Trägerelemente in Längsträgerrichtung gesehen seitlich voneinander beabstandet und zumindest über eine Teillänge der Trägerelementlänge aneinander vorbeibewegbar sind,
- zwei an den Enden beider Trägerelemente abgestützte Greifelemente, die oberhalb oder unterhalb von den Längsträgern angeordnet sind und die bei vollständig auseinandergeschobenen Trägerelementen quer zu diesen gesehen außen liegen, und
- zwei sich am Rahmen oder am Gehäuse auf einander gegenüberliegenden Seiten abstützenden, die beiden Trägerelemente gegenläufig verschiebenden Einrichtungen.

Auf diese Weise lässt sich eine sehr kompakte Ausbildung der Vorrichtung erzielen.

Um eine exakte Führung bei ausreichender Aufnahme von Querkräften zu erzielen, wird vorgeschlagen, dass die beiden Längsträger als Profilschienen ausgebildet sind.

Die Längsträgerführung lässt sich weiter verbessern, wenn jedes Trägerelement an einem in das Profil der Profilschiene eingreifenden, die Profilschiene mindestens teilweise umgreifenden Laufelement befestigt ist.

Eine weitere Verbesserung ergibt sich, wenn jedes Laufelement U-förmig ausgebildet und über im Laufelement umlaufende Kugeln an der Profilschiene abgestützt ist, was besonders zur Aufnahme von auftretenden Querkräften geeignet ist.

Zweckmäßigerweise ist jedes Greifelement über ein aus dem Gehäuse ragendes erstes Anschlusselement am Trägerelement abgestützt.

Insbesondere für das Greifen von flachen Lasten ist jedes Greifelement als plattenförmige Klemmbacke ausgebildet.

Eine kompakte Bauweise bei hohen Greifkräften (Klemmkräften) lässt sich erzielen, wenn jede Einrichtung als ein Pneumatikzylinder mit einer längsverschiebbaren Kolbenstange ausgebildet ist.

Eine kompakte Anordnung sieht vor, dass jeder Pneumatikzylinder am Gehäuse und die Kolbenstange über ein quer am Trägerelement angeordnetes zweites Anschlusselement an diesem befestigt ist.

Bei einer kompakten Ausbildung der Vorrichtung sind das erste und zweite Anschlusselement an unterschiedlichen Enden des Trägerelements voneinander wegweisend angeordnet

Um die beiden Greifelemente synchron gegenläufig zueinander zu verschieben, wird vorgeschlagen, dass an jedem zweiten Anschlusselement am oberen Ende eine zu den Längsträgern parallele Zahnstange befestigt ist und dass die beiden Zahnstangen zur Synchronisation ihrer gegenläufigen Längsverschiebung über ein zwischen ihnen angeordnetes Zahnrad miteinander verbunden sind.

Um die Vorrichtung auch bei Ausfall des Pneumatikzylinders während des Lastentransports in ihrer Greifstellung zu halten, wird eine Nothalteeinrichtung vorgeschlagen, bei der jedes zweite Anschlusselement im Bereich seines freien Endes mit einem ersten Lamellenkamm fest verbunden ist, der aus gleich beabstandeten parallel zu den Längsträgern verlaufenden flachen Lamellen besteht und in den ein korrespondierender zweiter an einem Ende mit dem Gehäuse verbundener Lamellenkamm eingreift, wobei die gegeneinander längsverschiebbaren Lamellen seitlich aneinander anliegen, und dass ein Stellelement vorgesehen ist, welches bei Druckabfall im Pneumatikzylinder die Lamellen von der Seite her zusammendrückt und damit das druckabfallbedingte Nachlassen der Klemmkraft zumindest kompensiert. Das Stellelement sorgt so für einen Kraftschluss zwischen den Lamellen, so dass sich die Klemmbacken auch bei Druckabfall im Pneumatikzylinder nicht auseinanderbewegen können.

Konstruktiv einfach ist es, wenn das Stellelement an einem schwenkbaren Doppelhebel angeordnet ist, an dessen einem Ende eine Federkraft und an dessen anderem Ende eine dem Druck des Pneumatikzylinders entsprechende Gegenkraft derart angreift, dass das Stellelement mit einer Kraft gegen die Lamellen drückt, die der Differenz aus der Federkraft und der Gegenkraft entspricht.

Zur Bildung der Gegenkraft wird vorgeschlagen, dass diese durch einen pneumatischen Hilfszylinder mittels einer Kolbenstange dargestellt wird, die am entsprechenden Hebelende anliegt, wobei der Pneumatikhilfszylinder an derselben Druckquelle angeschlossen ist wie der Pneumatikzylinder.

Bei einer einfachen Ausführung ist der Doppelhebel eine dreieckförmige Platte, wobei zwei benachbarte Ecken die beiden Enden des Doppelhebels und die dritte Ecke das nockenartige Stellelement bilden. Die dritte Ecke ragt hierbei als Nocken aus dem Doppelhebel heraus und drückt bei Verschwenken des Doppelhebels gegen die Lamellen.

Zweckmäßigerweise ist die Platte um ihren Flächenmittelpunkt drehbar, da sich auf diese Weise günstige Hebelverhältnisse ergeben.

Um die Pneumatikleitungen innerhalb des Gehäuses geschützt zu führen, ist es vorgesehen, dass das Gehäuse aus zwei ineinandergesteckten, auf einer Seite offenen Gehäusen besteht, die unter Belassung eines spaltförmigen Freiraums über Distanzstücke fest miteinander verbunden sind.

Ein Ausführungsbeispiel der Erfindung ist in der Zeichnung dargestellt und wird nachfolgend näher beschrieben. Es zeigen:
- Fig. 1: eine Vorrichtung zum Greifen mit aufgeschnittenem Gehäuse in einer dreidimensionalen Darstellung,
- Fig. 2: eine Draufsicht auf die beiden Pneumatikzylinder der Vorrichtung gemäß Fig. 1,
- Fig. 3: einen vertikalen Querschnitt der Vorrichtung gemäß der Schnittlinie A - A in Fig. 2,
- Fig. 4: einen vertikalen Querschnitt der Vorrichtung gemäß der Schnittlinie B - B in Fig. 2,
- Fig. 5: einen zwischen den beiden Pneumatikzylindern verlaufenden vertikalen Querschnitt gemäß der Schnittlinie C - C in Fig. 6,
- Fig. 6: eine Draufsicht auf die Nothalteeinrichtung und
- Fig. 7: eine Draufsicht auf die Synchronisiereinrichtung.

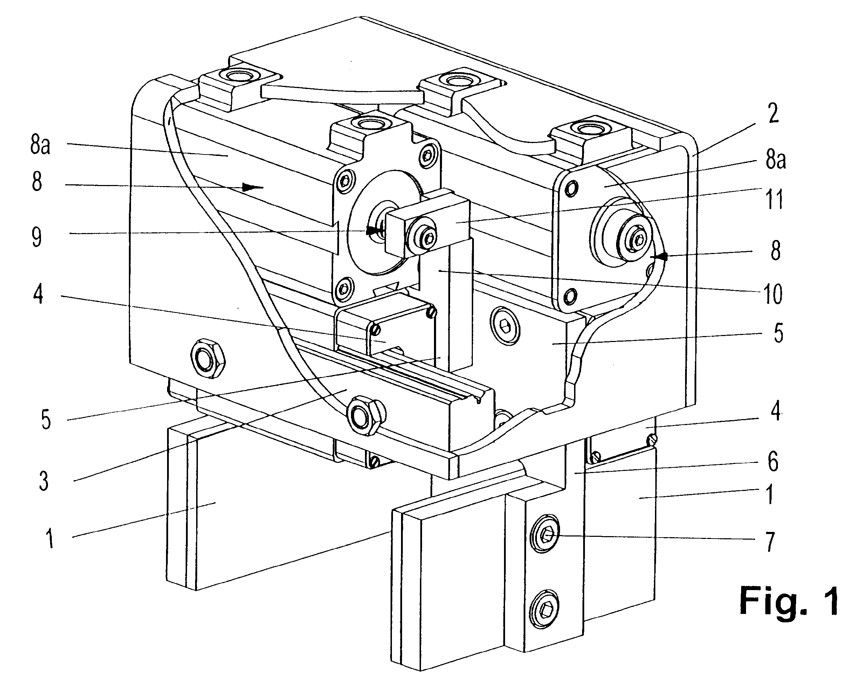

Fig. 1 zeigt die Vorrichtung zum Greifen von Lasten mit zwei Greifelementen 1 mit einander zugewandten plattenförmigen Klemmbacken, die unterhalb eines Gehäuses 2 aus diesem herausragen. Das Gehäuse 2 ist in dieser dreidimensionalen Darstellung teilweise aufgeschnitten gezeichnet, so dass man zwei Längsträger 3 erkennen kann, die in einer gemeinsamen Ebene parallel angeordnet und als Profilschienen ausgebildet sind. Die Längsträger 3 sind an den Innenseiten zweier gegenüberliegender Seitenwände des Gehäuses 2 angeschraubt. An jedem Längsträger 3 ist ein sich in Längsträgerrichtung erstreckendes Trägerelement 5 längsverschieblich geführt und abgestützt, das jeweils an einem auf dem Längsträger 3 verschiebbaren Laufelement 4 befestigt ist. Die beiden Trägerelemente 5 sind in Längsträgerrichtung gesehen seitlich voneinander beabstandet und über einen Teil der Trägerelementlänge aneinander vorbeibewegbar, so dass sich die Trägerelemente 5 von der Seite gesehen längenmäßig überschneiden.

Die beiden Trägerelemente 5 tragen jeweils an einem ihrer Enden ein angeformtes Anschlusselement 6, das nach unten aus dem Gehäuse 2 herausragt und an dem mittels Schrauben 7 jeweils ein Greifelement 1 befestigt (und damit am Trägerelement 5 abgestützt) ist.

Oberhalb der Längsträger 3 sind Einrichtungen 8 in Form von zwei an den Seitenwänden des Gehäuses 2 befestigten Pneumatikzylindern 8a mit einer längsverschiebbaren Kolbenstange 9 vorgesehen, mittels welcher die beiden Trägerelemente 5 gegenläufig zueinander verschiebbar sind. Die beiden Pneumatikzylinder 8a erstrecken sich oberhalb der Längsträger 3 in deren Längsrichtung, wobei die beiden Kolbenstangen 9 in zueinander entgegengesetzte Richtungen weisen.

Bedingt durch die antiparalle Anordnung der beiden Pneumatikzylinder 8a sieht man diese in Fig. 1 links von vorn und rechts daneben von hinten.

Dem Anschlusselement 6 gegenüberliegend ist am anderen freien Ende jedes Trägerelements 5 ein weiteres, sich nach oben zum Pneumatikzylinder 8a hin erstreckendes Anschlusselement 10 vorhanden, das mit dem Trägerelement 5 und über ein Verbindungsstück 11 mit der Kolbenstange 9 fest verbunden ist.

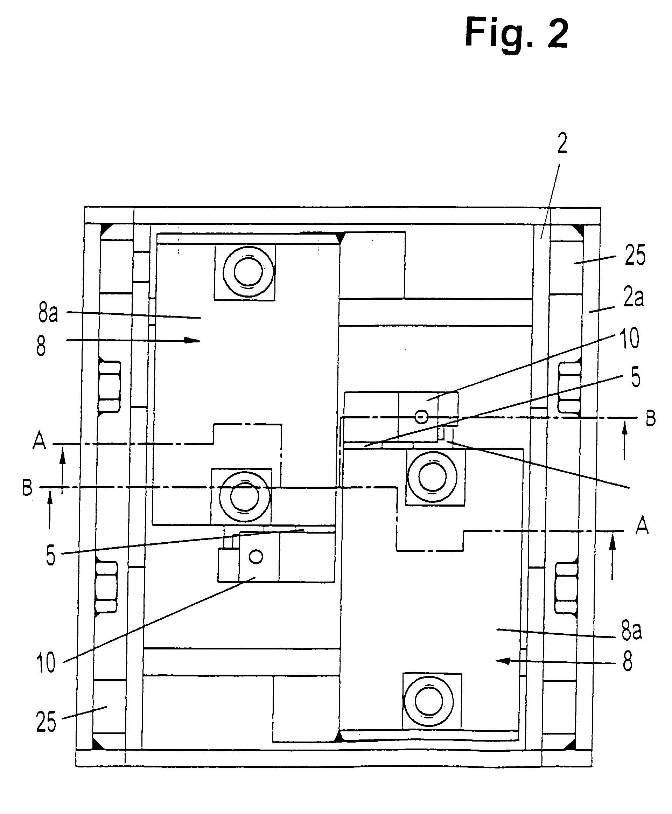

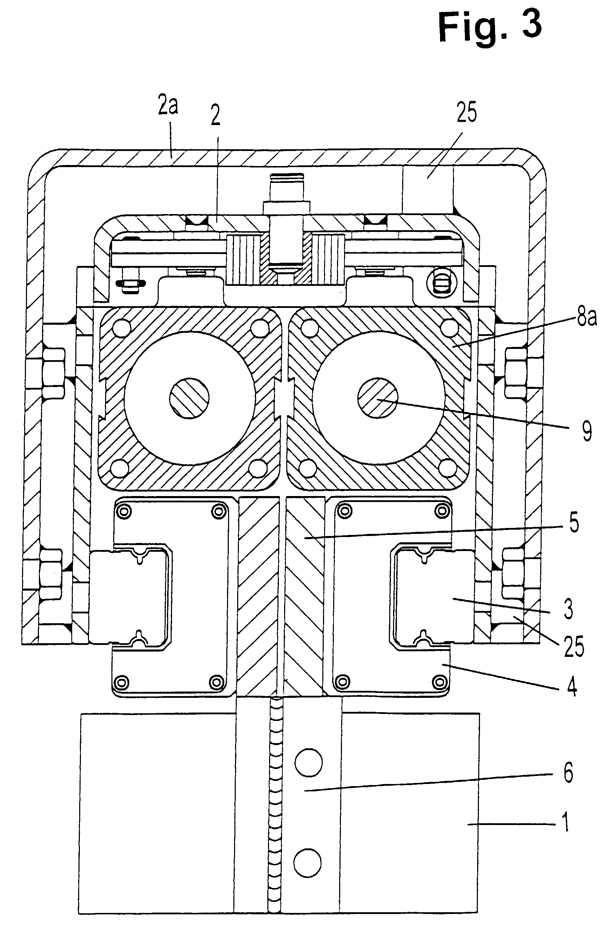

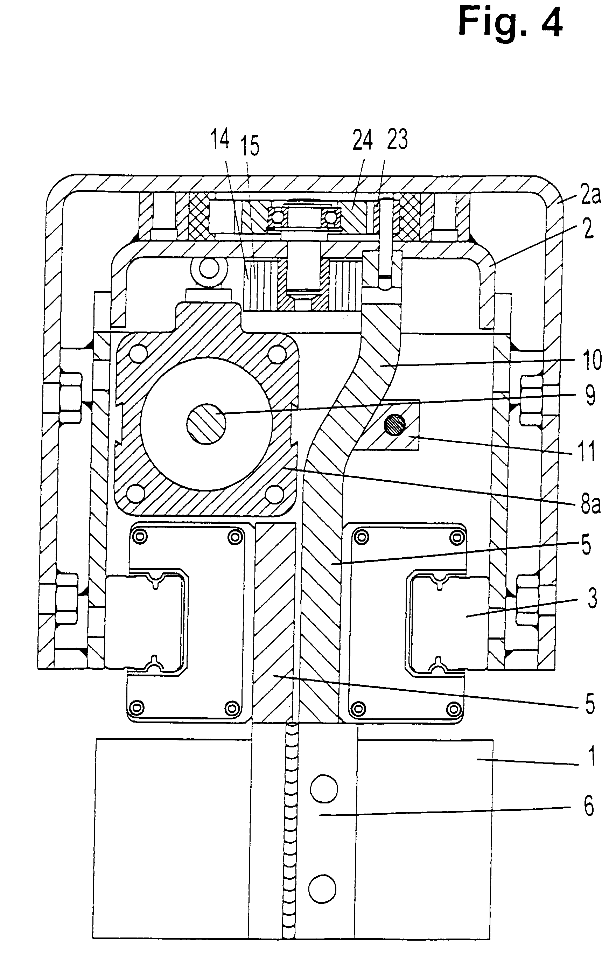

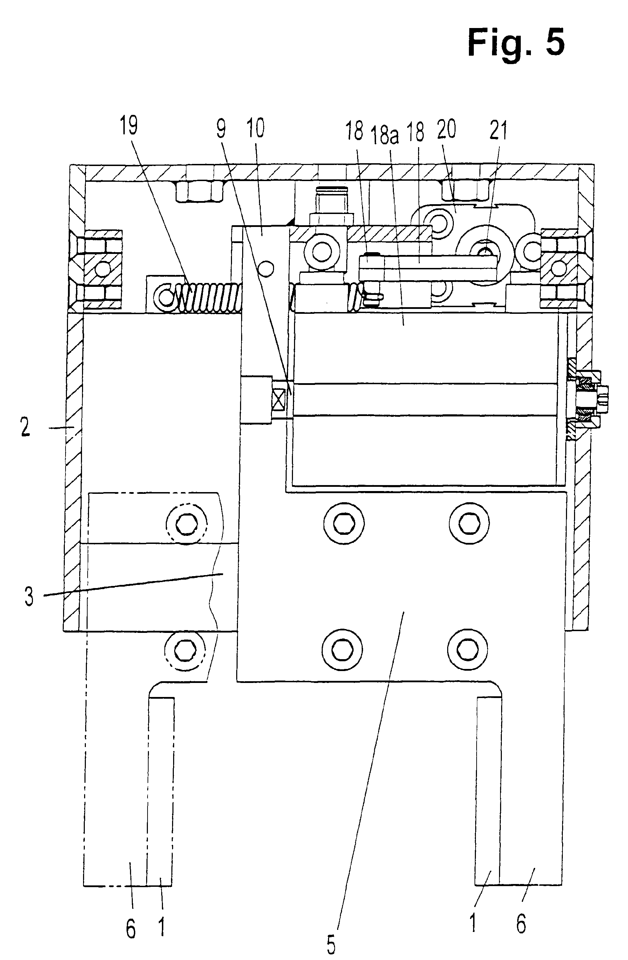

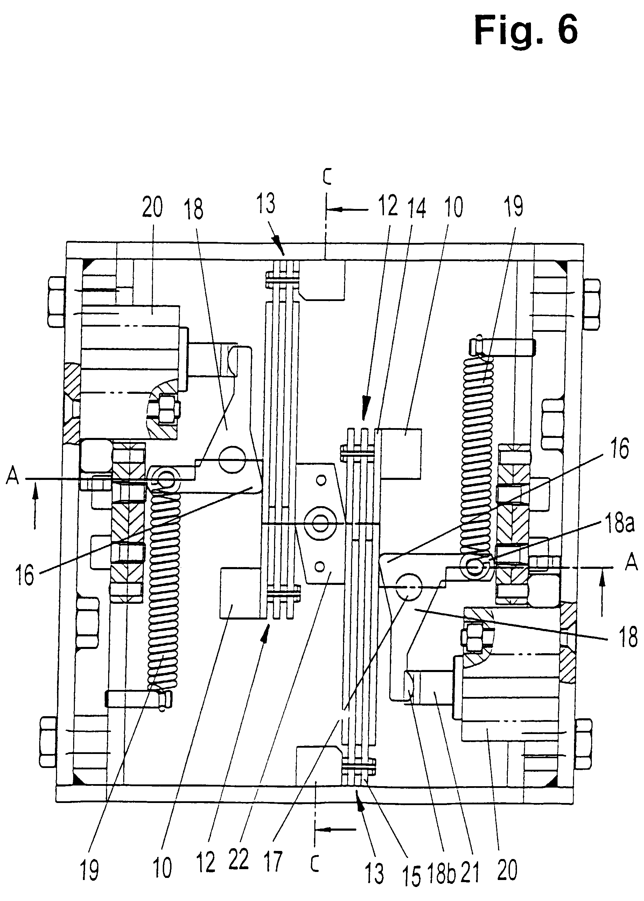

In Fig. 2 ist eine Draufsicht auf die beiden Pneumatikzylinder 8a zu sehen. Die zugehörigen vertikalen Schnitte gemäß den Schnittlinien A - A und B - B zeigen Fig. 3 und 4. Fig. 5 zeigt dagegen einen vertikalen Schnitt (C - C, s. Fig. 6) durch den von den beiden Pneumatikzylindern 8a gebildeten Spalt mit Sicht auf eines der beiden Trägerelemente 5 mit den sich nach oben und unten erstreckenden Anschluss-elementen 6 und 10; die Schnittlinie C - C verläuft im wesentlichen senkrecht zu den Schnittlinien A - A und B - B.

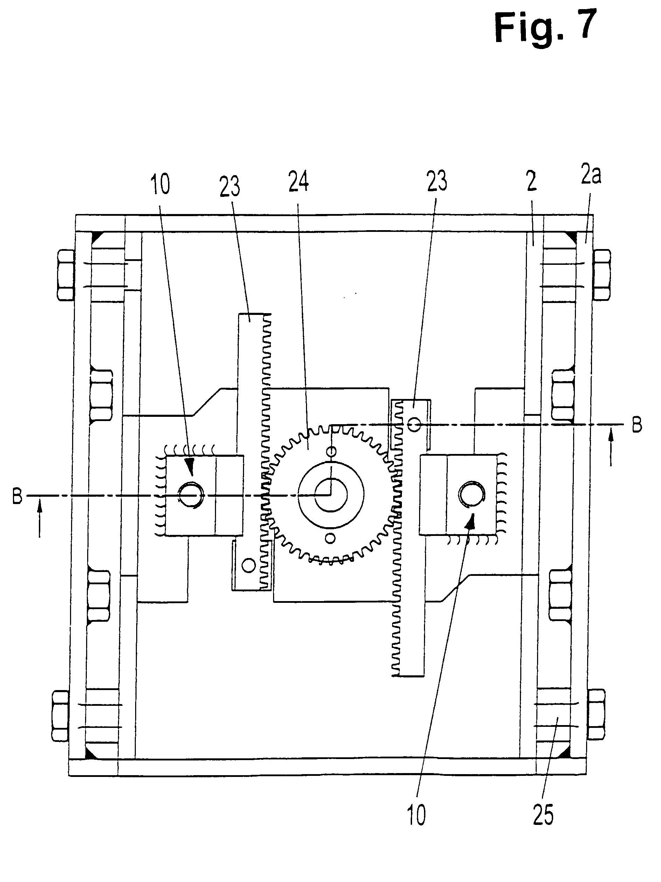

Im Unterschied zu Fig. 1 ist das Gehäuse in Fig. 2 auf zwei gegenüberliegenden Seiten (der rechten und der linken Seite in Fig. 2) doppelwandig ausgebildet. Außerdem befindet sich, wie Fig. 4 und 5 bereits erkennen lassen, oberhalb der beiden Pneumatikzylinder 8a eine Nothalteeinrichtung (s. insbesondere Fig. 6) und darüber in einer Gehäusekammer angeordnet eine Synchronisiereinrichtung (s. insbesondere Fig. 7), deren Teile zur besseren Übersicht in den Figuren 2 bis 5 teilweise weggelassen worden sind.

Fig. 3 und 4 zeigen die U-förmig ausgebildeten Laufelemente 4, welche die Profilschiene 3 jeweils bis auf die an der Gehäusewand befestigten Seite umfassen. Fig. 3 zeigt insbesondere, dass sich zwischen den beiden aneinander vorbeibewegbaren Trägerelementen 5 ein schmaler Luftspalt befindet. Ein Eingriff der Laufelemente 4 in die Längsnuten der Profilschienen 3 erfolgt mittels im Laufelement 4 umlaufenden Kugeln, die für eine spielfreie Abstützung des Laufelements 4 an der Profilschiene 3 sorgen. Dieser Art der Abstützung nimmt auch Querkräfte und Quermomente auf.

Fig. 5 zeigt die beiden vollständig auseinandergeschobenen Trägerelemente 5 quer zu deren Längserstreckung gesehen. Das zweite Trägerelement 5 (in Fig. 5 das auf der linken Seite dargestellte) ist zum besseren Verständnis mit eingezeichnet. Wie Fig. 5 erkennen lässt, sind hierbei die an den beiden Trägerelementen 5 abgestützten Greifelemente 1 an den beiden außen liegenden Enden des Trägerelementpaars angeordnet.

Fig. 6 zeigt die Nothalteeinrichtung von oben gesehen, die aus zwei ineinandergreifenden Lamellenkämmen 12, 13 besteht, die sich in einer gemeinsamen Horizontalebene befinden. Die Lamellen 14 des Lamellenkamms 12 bestehen aus gleichbeabstandeten parallel zu den Längsträgern 3 verlaufenden flachen Lamellenblechen, die an einem Ende mit dem Anschlusselement 6 verbunden sind.

In den Lamellenkamm 12 greift ein zweiter Lamellenkamm 13 ein, dessen Lamellen 15 ebenfalls aus Lamellenblechen bestehen, so dass die Lamellen 14, 15 seitlich aneinander anliegend gegeneinander längsverschiebbar sind. Der zweite Lamellenkamm 13 ist auf der dem Anschlusselement 6 gegenüberliegenden Seite am Gehäuse 2 befestigt. Auf einer Seite liegt ein Stellelement 16 an den Lamellen 14, 15 an, das um eine Achse 17 schwenkbar gelagert ist. Das Stellelement 16 gehört zu einem schwenkbaren Doppelhebel 18 an dessen einem Ende 18a eine Federkraft einer Feder 19 angreift. An dem anderen gegenüberliegenden Ende 18b des Doppelhebels 18 greift eine dem Druck im Pneumatikzylinder 8a entsprechende Gegenkraft an, die die Feder 19 spannt und so dafür sorgt, dass bei ausreichendem pneumatischem Druck das Stellelement 16 nicht gegen die Lamellen 14, 15 drückt.

Die Gegenkraft wird durch einen pneumatischen Hilfszylinder 20 mit einer Kolbenstange 21 gebildet, deren Ende an dem Hebelende 18b anliegt und den Doppelhebel 18 mit einer entsprechenden Kraft beaufschlagt. Die Grundeinstellung des Doppelhebels 18 ist hierbei derart gewählt, dass die Gegenkraft und die Federkraft sich die Waage halten. Der Hilfszylinder 20 ist hierzu mit derselben Druckquelle verbunden wie der Pneumatikzylinder 8a. Das Stellelement 16 drückt die Lamellen 14, 15 jeweils mit der Differenz dieser beiden Kraftmomente zusammen, wobei die Lamellen 14, 15 auf der dem Stellelement 16 gegenüberliegenden Seite über ein Gegenelement 22 am Gehäuse 2 abgestützt werden. Das Stellglied 16 drückt die Lamellen 14, 15 folglich bei Druckabfall im Pneumatikzylinder 8a so stark zusammen, dass damit die druckabfallbedingte Verringerung der Klemmkraft kompensiert wird. Dies hat zur Folge, dass bei Ausfall des Pneumatikzylinders 8a die Greifelemente 1 weiter zusammengedrückt werden, so dass die gegriffene Last nicht freigegeben wird.

Der Doppelhebel 8 ist als dreieckförmige Platte (Doppelplatte) ausgebildet, wobei zwei benachbarte Ecken die beiden Enden 18a, 18b des Doppelhebels 18 und die dritte abgerundete nockenartige Ecke das Stellelement 16 bilden. Die Platte ist hierbei etwa grob gesehen um ihren Flächenmittelpunkt drehbar.

Fig. 7 zeigt die über der Nothalteeinrichtung im Gehäuse angeordnete Synchronisiereinrichtung von oben gesehen, die aus zwei parallelen Zahnstangen 23 besteht, deren Zähne aufeinanderzugewandt sind. Die Zahnstangen sind jeweils am Anschlusselement 10 befestigt und werden folglich zusammen mit den Greifelementen 1 verschoben. Zur Synchronisation ihrer gegenläufigen Längsver-schiebungen sind beide Zahnstangen über ein zwischen ihnen angeordnetes Zahnrad 24 miteinander verbunden, welches jeweils in die Zahnstangen 23 eingreift.

Insbesondere die Figuren 3 und 4 zeigen, dass das Gehäuse aus zwei ineinandergesteckten, auf einer Seite offenen Gehäusen 2a, 2b besteht, die unter Belassung eines spaltförmigen Freiraums über Distanzstücke 25 miteinander verbunden sind. Im Freiraum sind die Pneumatikleitungen gegen äußere Einflüsse geschützt verlegt (nicht gezeigt).

### Bezugszeichenliste:

- 1: Greifelement
- 2: Gehäuse
- 3: Längsträger
- 4: Laufelement
- 5: Trägerelement
- 6: Anschlusselement
- 7: Schraube
- 8: Einrichtung
- 8a: Pneumatikzylinder
- 9: Kolbenstange
- 10: Anschlusselement
- 11: Verbindungsstück
- 12: Lamellenkamm
- 13: Lamellenkamm
- 14: Lamelle
- 15: Lamelle
- 16: Stellelement
- 17: Achse
- 18: Doppelhebel
- 18a: Hebelende
- 18b: Hebelende
- 19: Feder
- 20: pneumatischer Hilfszylinder
- 21: Kolbenstange
- 22: Gegenelement
- 23: Zahnstange
- 24: Zahnrad
- 25: Distanzstück

## Patentansprüche

1. Vorrichtung zum Greifen von Lasten, die insbesondere mittels eines Manipulators von oben oder seitlich zu greifen sind,
mit zwei einander zugewandten Greifelementen, die oberhalb oder unterhalb von mindestens einem vorgesehen Längsträger quer zu diesem bzw. diesen angeordnet sind,
**gekennzeichnet durch**
zwei parallele Längsträger (3), an denen jeweils ein sich in Längsträgerrichtung erstreckendes Trägerelement (5) längsverschieblich geführt und abgestützt ist, wobei die beiden Trägerelemente (5) in Längsträgerrichtung gesehen seitlich voneinander beabstandet und zumindest über eine Teillänge der Trägerelementlänge aneinander vorbeibewegbar sind,
zwei an den Enden beider Trägerelemente (5) abgestützte Greifelemente (1), die oberhalb oder unterhalb von den Längsträgern (3) angeordnet sind und die bei vollständig auseinandergeschobenen Trägerelementen (5) quer zu diesen gesehen außen liegen, und
zwei sich am Rahmen oder am Gehäuse (2) auf einander gegenüberliegenden Seiten abstützende, die beiden Trägerelemente (5) gegenläufig verschiebende Einrichtungen (8).

2. Vorrichtung nach Anspruch 1,
**dadurch gekennzeichnet**,
dass die beiden Längsträger (3) als Profilschienen ausgebildet sind.

3. Vorrichtung nach Anspruch 2,
**dadurch gekennzeichnet**,
dass jedes Trägerelement (5) an einem in das Profil der Profilschienen eingreifenden, die Profilschiene mindestens teilweise umgreifenden Laufelement (4) befestigt ist.

4. Vorrichtung nach einem der Ansprüche 1 - 3,
**dadurch gekennzeichnet**,
dass jedes Laufelement (4) U-förmig ausgebildet und über im Laufelement (4) umlaufende Kugeln an der Profilschiene abgestützt ist.

5. Vorrichtung nach einem der Ansprüche 1 - 4,
**dadurch gekennzeichnet**,
dass jedes Greifelement (1) über ein aus dem Gehäuse (2) ragendes erstes Anschlusselement (6) am Trägerelement (5) abgestützt ist.

6. Vorrichtung nach einem der Ansprüche 1 - 5,
**dadurch gekennzeichnet**,
dass jedes Greifelement (1) als plattenförmige Klemmbacke ausgebildet ist.

7. Vorrichtung nach einem der Ansprüche 1 - 6,
**dadurch gekennzeichnet**,
dass jede Einrichtung (8) als ein Pneumatikzylinder (8a) mit einer längsverschiebbaren Kolbenstange (9) ausgebildet ist.

8. Vorrichtung nach Anspruch 7,
**dadurch gekennzeichnet**,
dass jeder Pneumatikzylinder (8a) am Gehäuse (2) und die Kolbenstange (9) über ein quer am Trägerelement (5) angeordnetes zweites Anschlusselement (10) am Trägerelement (5) befestigt ist.

9. Vorrichtung nach einem der Ansprüche 5 oder 8,
**dadurch gekennzeichnet**,
dass das erste und zweite Anschlusselement (6, 10) einander abgewandt und an unterschiedlichen Enden des Trägerelements (5) angeordnet sind.

10. Vorrichtung nach einem der Ansprüche 8 oder 9,
**dadurch gekennzeichnet**,
dass an jedem zweiten Anschlusselement (10) im Bereich seines Endes eine zu den Längsträgern (3) parallele Zahnstange (23) befestigt ist und dass die beiden Zahnstangen (23) zur Synchronisation ihrer gegenläufigen Längsverschiebung über ein zwischen ihnen angeordnetes Zahnrad (24) miteinander verbunden sind.

11. Vorrichtung nach einem der Ansprüche 8 oder 10,
**dadurch gekennzeichnet**,
dass jedes zweite Anschlusselement (10) im Bereich seines freien Endes mit einem ersten Lamellenkamm (12) fest verbunden ist, der aus gleichbeabstandeten parallel zu den Längsträgern (3) verlaufenden flachen Lamellen (14, 15) besteht und in den ein korrespondierender zweiter an einem Ende mit dem Gehäuse (2) fest verbundener Lamellenkamm (12) eingreift, wobei die gegeneinander längsverschiebbaren Lamellen (14, 15) seitlich aneinander anliegen,
und dass ein Stellelement (16) vorgesehen ist, welches bei Druckabfall im Pneumatikzylinder (8a) die Lamellen (14, 15) seitlich zusammendrückt und damit das druckabfallbedingte Nachlassen der Klemmkraft zumindest kompensiert.

12. Vorrichtung nach Anspruch 11,
**dadurch gekennzeichnet**,
dass das Stellelement (16) an einem schwenkbaren Doppelhebel (18) vorgesehen ist, an dessen einem Ende (18a) eine Federkraft und an dessen anderem Ende (18b) eine dem Druck im Pneumatikzylinder (8a) entsprechende Gegenkraft derart angreift, dass das Stellelement (16) mit einer seitlich gegen die Lamellen (14, 15) gerichteten Kraft drückt, die der Differenz aus der Federkraft und der Gegenkraft entspricht.

13. Vorrichtung nach Anspruch 12 ,
**dadurch gekennzeichnet**,
dass die Gegenkraft durch einen pneumatischen Hilfszylinder (20) mittels einer Kolbenstange (21) gebildet ist, die am entsprechenden Hebelende (18b) anliegt, wobei der Pneumatikhilfszylinder (20) mit derselben Druckquelle verbunden ist wie der Pneumatikzylinder (8a).

14. Vorrichtung nach einem der Ansprüche 12 oder 13,
**dadurch gekennzeichnet**,
dass der Doppelhebel (18) eine dreieckförmige Platte ist, wobei zwei benachbarte Ecken die beiden Enden (18a, 18b) des Doppelhebels (18) und die dritte Ecke das Stellelement (16) bilden.

15. Vorrichtung nach Anspruch 14,
**dadurch gekennzeichnet,**
dass die Platte um ihren Flächenmittelpunkt drehbar ist.

16. Vorrichtung nach einem der Ansprüche 1 - 15,
**dadurch gekennzeichnet**,
dass das Gehäuse (2) aus zwei ineinandergesteckten, auf einer Seite offenen Gehäusen (2) besteht, die unter Belassung eines spaltförmigen Freiraums über Distanzstücke (25) miteinander verbunden sind.
